# EUROPEAN PATENT SPECIFICATION

(11) **EP 2 505 501 B1**
(45) Date of publication and mention of the grant of the patent: **29.10.2014**
(21) Application number: 11400026.8
(22) Date of filing: 30.03.2011
(51) Int. Cl.: B29C 70/44, B64C 27/72

(54) **Method of manufacturing a fibre-reinforced profile**
Verfahren zur Herstellung eines faserverstärkten Profils
Procédé de fabrication d'un profilé renforcé par des fibres

(43) Date of publication of application: 03.10.2012
(73) Proprietor: AIRBUS HELICOPTERS DEUTSCHLAND GmbH, 86609 Donauwörth (DE)
(72) Inventor: Wagner, Alois, 83623 Dietramszell (DE); Kuntze-Fechner, Gerald, 83666 Waakirchern (DE)
(74) Representative: Pouillot, Laurent Pierre Paul

(56) References cited:
- US-A- 4 923 541
- US-A1- 2002 102 373
- US-A1- 2005 257 956
- TAEOH LEE ET AL: "Design of piezostack-driven trailing-edge flap actuator for helicopter rotors; Piezostack-driven trailing-edge flap actuator", SMART MATERIALS AND STRUCTURES, IOP PUBLISHING LTD., BRISTOL, GB, vol. 10, no. 1, 1 February 2001 (2001-02-01), pages 15-24, XP020071442, ISSN: 0964-1726, DOI: 10.1088/0964-1726/10/1/302

## Description

The invention concerns a method for manufacturing fibre-reinforced profiles.

It is known in aeronautical industry to manufacture profiles from fibre-reinforced synthetic material, such as loops made of reinforced fibre glass (GRP) or reinforced carbon fibres (CRP) bedded in epoxy resin.

Different types of production processes are state of the art:
- prepreg straps are wound endlessly on a drift;
- prepreg straps are put with a looping angle of 180° around a drift;
- soaked fibre bundles are wound endlessly with epoxy resin on a drift.

The rotor blades of many helicopters have a GRP loop connection. Through the high load due to centrifugal forces, impact and edgewise moments, a very high static and dynamic strength is required for this application to achieve a high expected life duration.

For curing of a continuous loop under external pressure the loop is wound on the drift. During curing under external pressure, i. e. vacuum and if necessary autoclave pressure, the fibre-reinforced synthetic material positions itself. In particular the external fibres are compressed through the reduction of the circumference. Due to the missing elongation they are not fully stretched and therefore they are not able to carry loads as if they would be stretched. This effect is stronger with relatively thick loops than with relatively thin loops. A thick loop is defined by Rₐ/Rᵢ >1,5 and a thin loop is defined by Rₐ/Rᵢ = 1-1,5 with Rₐ being the outer radius of the loop and Rᵢ being the inner radius of the loop.

To remedy said disadvantage curing of a continuous loop under internal pressure in an external form might be considered. However, only the internal fibres are stretched while applying the internal pressure, such as vacuum and if necessary autoclave pressure, pressure bag. The internal pressure cannot be transferred up to the external form. The consequence is that only the internal fibres of such a continuous loop are sufficiently stretched and carry the loads.

The document US2009115089 discloses a method for curing using internal pressure.

The document WO2009087115 discloses a method for the production of fibre-reinforced composites with complex cross-sectional shape. The method is based on the use of centrifugal force to provide the internal pressure.

The document US 4923541 A discloses a method for the manufacture of advanced composite tubes involving the steps of wrapping various layers, including a composite layup, around an elongated mandrel, placing the mandrel with layers applied in a tubular female mold, expanding the diameter of the mandrel, thus forcing the various layers to compress against the surface of the female mold. In order to remove excess resin from the layup this method also incorporates a resin absorbing layer which is wrapped around the mandrel prior to the composite layup. In addition, all the layers necessary to produce the tube are wrapped around the mandrel with a wrapping apparatus in which the various layers are first placed flat on a sheet. The sheet is then pulled around the mandrel, mechanically transferring the various layers to the perimeter of the mandrel.

The document US 2005257956 A1 discloses a composite structural member with an integrated electrical circuit and an associated method of manufacture. The structural member includes a plurality of layers of structural reinforcement material and two or more electrical devices are disposed at least partially between the layers with an intermediate layer of the structural reinforcement material disposed between the electrical devices.

The object of the invention is to provide a manufacturing method allowing high stiffness of all fibres in a loop.

The invention solves the problem according to a method of manufacturing a fibre-reinforced profile with the features of claim 1.

According to the invention a method of manufacturing a fibre-reinforced profile is provided with the following steps: First a drift and an external mould form is provided.

Subsequently at least two sets of fibre-reinforced material are provided with each of said at least two sets comprising at least one laminate package of said fibre-reinforced material. Said laminate package is preferably composed of prepreg layers with intermediate separating foils and each of said laminate packages is longer than a fraction of the periphery of the drift and any in between laminate package of said fibre-reinforced material. The fraction of the periphery of the drift is defined by a division of the number of sets through the entire length of the periphery of said drift. Subsequently said at least two sets are arranged around said drift by placing a laminate package of one of said at least two sets on the drift and placing a laminate package of another one of said at least two sets on the drift such that the preceding laminate package of the other one of said at least two sets is overlapped at least partly to form a prefabricated loop. Subsequently said prefabricated loop is positioned inside said external mould form, said internal periphery of the external mould form being longer than the external periphery of the prefabricated loop. Pressure is applied to the internal periphery of the prefabricated loop to press said external periphery of the prefabricated loop against said internal periphery of the external mould to cure the prefabricated loop to the fibre-reinforced profile. E. g.: The fraction of the periphery of the drift resulting from the division of the number of two sets through the entire length of the periphery of said drift is half, three sets would make the fraction = 1/3, and so on. With the inventive method of manufacturing it is ensured that for curing all fibres are uniformly stretched and hence the laminate quality and the mechanical characteristics of the loop reach their respective optima. The inventive method is in particular advantageous if applied to rotor blades for best quality, stiffness and stability of the resulting fibre-reinforced profile. A further advantage of the invention is a less complex production and an increase in reproducibility of production results at overall reduced production costs. The fibres used for any of the laminate packages are carbon fibres with an elasticity modulus of up to 210 000 N/mm². The intermediate separating foils between the layers allow areas in the laminate packages without shear stresses for increased flexibility at high tensile strength of the laminate packages.

According to a preferred embodiment of the invention said prefabricated loop is removed from the drift before positioning said prefabricated loop inside said external mould form thus allowing less complex tools for the inventive method of manufacturing.

According to a further preferred embodiment of the invention the laminate packages are tapered at their ends to allow smooth overlapping of the laminate packages.

According to a further preferred embodiment of the invention overlapping of the tapered ends of the laminate packages is effected along two vertices of the drift where the most advantageous effects of stretching the outer laminate packages can be expected.

According to a further preferred embodiment of the invention the respective laminate packages of the at least two sets overlap to an extend after arrangement to the drift that complete adaption of the outer laminate packages of said prefabricated loop to the internal periphery of the external mould form occurs.

According to a further preferred embodiment of the invention the sets of overlapping laminate packages are warmed to cure.

An actuator can be manufactured by a method according to any of the preceding embodiments, said actuator with piezostacks integrated into the fibre-reinforced profile being suitable for actuation of rotor wing flaps. The high stiffness of the profiles manufactured according to the invention allows the necessary transmission ratios resulting from the small actuation distances of piezostacks.

A preferred embodiment of the invention is presented by way of the following description with reference to the attached drawings.
Fig. 1 shows two sets of laminate packages of fibre-reinforced material arranged along a drift according to the invention,
Fig. 2 shows curing of a half shell bending loop according to the invention, and
Fig. 3 shows a prefabricated loop inside an external mould form according to the invention.

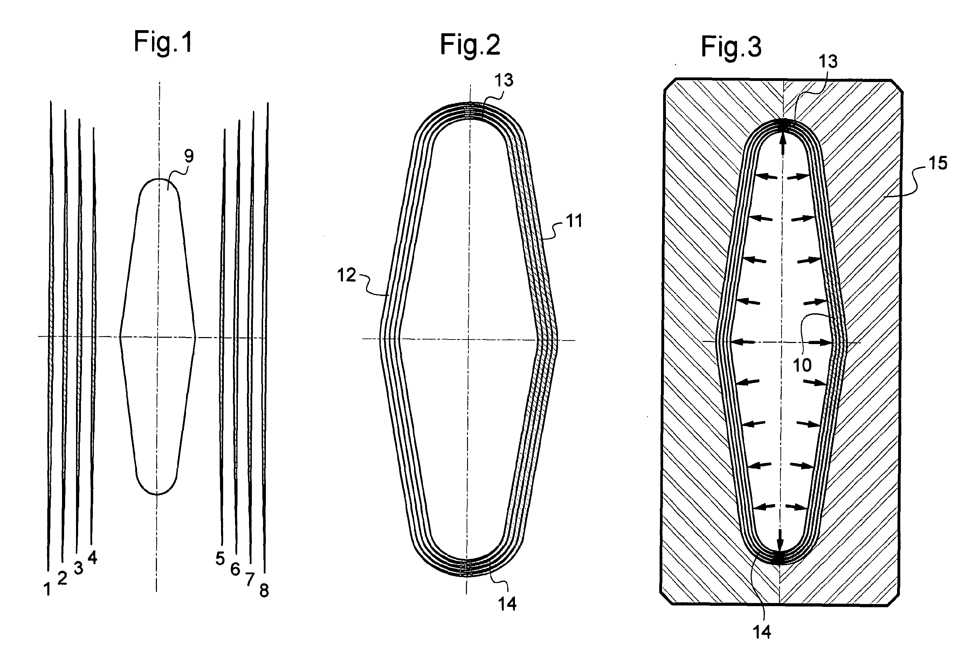

According to Fig. 1 in a first step of the method of manufacturing a fibre-reinforced profile 10 several prepreg laminate packages 1-8 with from inside to outside increasing lengths are provided by putting them down on an even area. Each of said laminate packages 1-8 is built up from 11 unidirectional carbon fibre layers, namely prepregs, with respectively two intermediate separating foils between two adjacent layers. The layers are increasing in length and are arranged to form a wedge shape resulting in tapered ends for each of said laminate packages 1-8. The intermediate separating foils leave the ends and a mid area free between two adjacent layers allowing unhampered cure of the prepreg layers at the ends and the mid area.

Each of said laminate packages 1-8 is longer than half of the periphery of a drift 9 and any in between laminate packages 1-3 or 5-7 of said fibre-reinforced material. Said laminate packages 1-8 are arranged to form a wedge shape with the longest laminate packages 1, 8 at the outside.

The diameter of the drift 9 is reduced against the final contour of the fibre-reinforced profile 10. The length of such a contour may be about 150 mm. The contour is cut to a height of 23 mm by means of a clamping device.

According to Fig. 2 a right hand and a left hand semi-monocoque 11, 12 are formed from said laminate packages 1-8 to a prefabricated loop by repeatingly putting said laminate packages 1-8 on the drift 9 in a way that if one laminate package 1-4 of one set is put down on the drift 9 an overlapping laminate package 5-8 from the opposite set is put down on the drift 9 or vice versa with the overlapping of said laminate packages 1-8 occurring on both vertices 13, 14 of the drift 9 up to the lay-out of the total prefabricated loop 11, 12.

According to Fig. 3 the prefabricated loop 11, 12 is removed from the drift 9 and positioned in an external mould form 15. In the not cured condition the prefabricated loop 11, 12 is a little smaller than the contour of the mould form 15. Curing of the prefabricated loop runs under internal pressure to the internal periphery of the prefabricated loop to urge said external periphery of the prefabricated loop against said internal contour of the external mould form 15 to form the fibre-reinforced profile 10. The internal pressure is in the range of 4 bar and is applied by means of a silicon pressure bag. Overlaps of the laminate packages 1-8 at their respective ends at the vertices 13, 14 are directed by the internal pressure until full contact is reached of the external periphery of the prefabricated loop 11, 12 to said internal contour of the external mould form 15.

The external mould form 15 may be warmed to cure the prefabricated loop 11, 12.

## Claims

1. A method of manufacturing a fibre-reinforced profile (10) with the following steps:
providing a drift (9) and an external mould form (15),
providing at least two sets of fibre-reinforced material with each of said at least two sets comprising at least one laminate package (1-8) of said fibre-reinforced material comprising prepreg layers (1-8) of said fibre-reinforced material with intermediate separating foils, the intermediate separate foils leaving the ends and a mid area free between two adjacent prepreg layers (1-8) of said fibre-reinforced material; each of said laminate packages (1-8) being longer than a fraction of the periphery of the drift (9) and any in between laminate package (1-3, 5-7) of said fibre-reinforced material, the fraction of the periphery of the drift (9) being defined by a division of the number of sets through the entire length of the periphery of said drift (9),
arranging said at least two sets around said drift (9) by placing a laminate package (1-4) of one of said at least two sets on the drift (9) and placing a laminate package (5-8) of another one of said at least two sets on the drift such that the preceding laminate package of the other one of said at least two sets is overlapped with the overlapping of said laminate packages (1-8) occurring on two vertices (13, 14) of the drift (9) up to the lay-out of a prefabricated loop (11, 12),
positioning said prefabricated loop (11, 12) inside said external mould form (15), said internal contour of the external mould form (15) being longer than the external periphery of the prefabricated loop (11, 12), and
applying pressure to the internal periphery of the prefabricated loop (11, 12) to press said external periphery of the prefabricated loop (11, 12) against said internal contour of the external mould form (15) to cure the prefabricated loop (11, 12) to the fibre-reinforced profile (10).

2. The method according to claim 1,
**characterized by** removing said prefabricated loop (11, 12) from the drift (9) before positioning said prefabricated loop (11, 12) inside said external mould form (15).

3. The method according to claim 1,
**characterized by** tapering the laminate packages (1-8) at their ends.

4. The method according to claim 1,
**characterized by** overlapping the laminate packages to an extend that a complete adaption to the internal contour of the external mould form (15) is effected.

5. The method according to claim 1,
**characterized by** warming the sets of overlapping laminate packages (1-8) to cure.

## Patentansprüche

1. Verfahren zur Herstellung eines faserverstärkten Profils (10) mit den folgenden Schritten:
Vorsehen eines Aufwickelkörpers (9) und einer Außenform (15),
Vorsehen von mindestens zwei Sätzen faserverstärkten Materials, wobei jedes der mindestens zwei Sätze mindestens ein Laminatpaket (1-8) aus dem faserverstärkten Material aufweist, mit Prepreg-Schichten (1-8) aus dem faserverstärkten Material mit dazwischengeschichteten Trennfolien, wobei die zwischengeschichteten Trennfolien die Enden und einen Mittenbereich zwischen zwei benachbarten Prepreg-Schichten (1-8) aus dem faserverstärkten Material freilassen, wobei jedes der Laminatpakete (1-8) länger ist als ein Bruchteil des Umfangs des Aufwickelkörpers (9) und als jedes dazwischenliegende Laminatpaket (1-3, 5-7) aus dem faserverstärkten Material, wobei der Bruchteil des Umfangs des Aufwickelkörpers (9) definiert ist durch eine Division der Anzahl von Sätzen durch die Gesamtlänge des Umfangs des Aufwickelkörpers (9),
Anordnen der mindestens zwei Sätze um den Aufwickelkörper (9) durch Platzieren eines Laminatpaketes (1-4) eines der mindestens zwei Sätze auf dem Aufwickelkörper (9) und Platzieren eines Laminatpaketes (5-8) des anderen der mindestens zwei Sätze auf dem Aufwickelkörper, derart, dass das vorhergehende Laminatpaket des anderen der mindestens zwei Sätze überlappt ist mit der Überschneidung der Laminatpakete (1-8), die in zwei Scheitelbereichen (13, 14) des Aufwickelkörpers (9) bis zu der Anordnung einer vorgefertigten Windung (11, 12) auftritt,
Positionieren der vorgefertigten Windung (11, 12) in der Außenform (15), wobei das Innenprofil der Außenform (15) länger ist als der Außenumfang der vorgefertigten Windung (11, 12) und
Anlegen eines Drucks auf den inneren Umfang der vorgefertigten Windung (11, 12), um den äußeren Umfang der vorgefertigten Windung (11, 12) gegen das Innenprofil der Außenform (15) zu pressen, um die vorgefertigte Windung (11, 12) in Form des faserverstärkten Profils (10) auszuhärten.

2. Verfahren nach Anspruch 1,
**gekennzeichnet durch** Entfernen der vorgefertigten Windung (11, 12) von dem Aufwickelkörper (9) vor dem Positionieren der vorgefertigten Windung (11, 12) innerhalb der Außenform (15).

3. Verfahren nach Anspruch 1,
**gekennzeichnet durch** Anschrägen der Laminatpakete (1-8) an deren Enden.

4. Verfahren nach Anspruch 1,
**gekennzeichnet durch** Überlappen der Laminatpakete in einem Ausmaß, dass eine vollständige Anpassung an das Innenprofil der Außenform (15) erfolgt.

5. Verfahren nach Anspruch 1,
**gekennzeichnet durch** Erwärmen des Satzes überlappender Laminatpakete (1-8), um diese auszuhärten.

## Revendications

1. Procédé de fabrication d'un profilé renforcé de fibres (10) avec les étapes suivantes :
se procurer un mandrin (9) et une forme de moule externe (15),
se procurer au moins deux jeux de matériau renforcé de fibres avec chacun desdits au moins deux jeux comprenant au moins un ensemble stratifié (1-8) dudit matériau renforcé de fibres comprenant des couches de préimprégné (1-8) dudit matériau renforcé de fibres avec des films de séparation intermédiaires, les films de séparation intermédiaires laissant les extrémités et une zone centrale libres entre deux couches de préimprégné adjacentes (1-8) dudit matériau renforcé de fibres; chacun desdits ensembles stratifiés (1-8) étant plus long qu'une fraction de la périphérie du mandrin (9) et n'importe quel ensemble stratifié intercalé (1-3, 5-7) dudit matériau renforcé de fibres, la fraction de la périphérie du mandrin (9) étant définie par une division du nombre de jeux par la longueur entière de la périphérie dudit mandrin (9),
disposer lesdits au moins deux jeux autour dudit mandrin (9) en plaçant un ensemble stratifié (1-4) de l'un desdits au moins deux jeux sur le mandrin (9) et en plaçant un ensemble stratifié (5-8) d'un autre desdits au moins deux jeux sur le mandrin de telle sorte que l'ensemble stratifié précédent de l'autre desdits au moins deux jeux soit chevauché avec le chevauchement desdits ensembles stratifiés (1-8) survenant sur deux sommets (13, 14) du mandrin (9) jusqu'à l'établissement d'une boucle préfabriquée (11, 12),
positionner ladite boucle préfabriquée (11, 12) à l'intérieur de ladite forme de moule externe (15), ledit contour interne de la forme de moule externe (15) étant plus long que la périphérie externe de la boucle préfabriquée (11, 12), et
appliquer une pression à la périphérie interne de la boucle préfabriquée (11, 12) pour appuyer ladite périphérie externe de la boucle préfabriquée (11, 12) contre ledit contour interne de la forme de moule externe (15) afin de durcir la boucle préfabriquée (11, 12) en profil renforcé de fibres (10).

2. Procédé selon la revendication 1,
**caractérisé par** le retrait de ladite boucle préfabriquée (11, 12) du mandrin (9) avant le positionnement de ladite boucle préfabriquée (11, 12) à l'intérieur de ladite forme de moule externe (15).

3. Procédé selon la revendication 1,
**caractérisé par** le rétrécissement des ensembles stratifiés (1-8) à leurs extrémités.

4. Procédé selon la revendication 1,
**caractérisé par** le chevauchement des ensembles stratifiés à un point tel qu'une adaptation complète au contour interne de la forme de moule externe (15) est effectuée.

5. Procédé selon la revendication 1,
**caractérisé par** le chauffage des jeux d'ensembles stratifiés se chevauchant (18) jusqu'au durcissement.
